(19) Europäisches Patentamt
European Patent Office
Office européen des brevets

(11) Publication number: **0 229 327 B1**

(12) **EUROPEAN PATENT SPECIFICATION**

(45) Date of publication of patent specification: **26.02.92**

(51) Int. Cl.5: **C08L 67/02**, C08L 69/00

(21) Application number: **86117256.7**

(22) Date of filing: **11.12.86**

(54) **Thermoplastically moldable compositions.**

(30) Priority: **17.12.85 US 809273**

(43) Date of publication of application:
**22.07.87 Bulletin 87/30**

(45) Publication of the grant of the patent:
**26.02.92 Bulletin 92/09**

(84) Designated Contracting States:
**DE FR GB IT NL**

(56) References cited:
**DE-A- 2 754 889**
**US-A- 3 673 278**
**US-A- 4 146 524**

**PATENT ABSTRACTS OF JAPAN, vol. 9, no. 160 (C-289)[1883], 4th July 1985; & JP - A - 60 35048 (SUMITOMO) 22-02-1985**

(73) Proprietor: **GENERAL ELECTRIC COMPANY**
**1 River Road**
**Schenectady New York 12305(US)**

(72) Inventor: **Boutni, Omar Mohamed**
**1232 Oriole Circle**
**Mt. Vernon Indiana 47620(US)**
Inventor: **Mark, Viktor**

**deceased(US)**

(74) Representative: **Catherine, Alain et al**
**General Electric France Service de Propriété Industrielle 18 Rue Horace Vernet**
**F-92136 Issy-Les-Moulineaux Cedex(FR)**

EP 0 229 327 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The invention relates to thermoplastically moldable polyester resin compositions.

Polyester resins having properties useful for thermoplastic molding, such as injection molding, are well known. However, not all of the known polyester resins are useful for injection molding. Especially difficult to injection mold are those polyester resins which possess hot-melt adhesive properties. Although not qualifying as a hot-melt adhesive, certain polyester polymers cannot be injection molded because they adhere strongly to metallic surfaces when in a heat-softened condition followed by cooling and solidification. One class of such polyester resins are those obtained by the reaction of aromatic dicarboxylic acids with cycloaliphatic dialkanols. An example of such polyester resins is the one described in U.S - A - 2,901,466.

It will be appreciated by those skilled in the art of injection molding that these polyesters are generally unsuited for molding in conventional injection molding apparatus. The polyester wraps itself around the screw and adheres to the metallic surfaces of the injection molding machine.

However, these polyesters have other physical properties which may be desirable in molded articles and in articles molded from blends of resins with compatible synthetic polymeric resins which are not themselves difficult to mold by thermoplastic molding techniques.

We have found that a particular class of mold release agents, added to these polyesters blended with polycarbonates provide thermoplastically moldable compositions which are useful to injection mold a wide variety of articles. The agents do not significantly degrade the molded resin articles, in the proportions employed.

The invention comprises a thermoplastically moldable, synthetic resin composition, which comprises; a blend of

a) 10 to 95 parts by weight of a polyester resin prepared by the condensation of a cis- or trans-isomer of 1,4-cyclohexanedimethanol with a hexacarbocyclic dicarboxylic acid;
and
b) 5 to 90 parts by weight of an aromatic polycarbonate; and 0.001 to 0.45 weight percent of the resin of a mold release additive selected from polymers of the formula:-

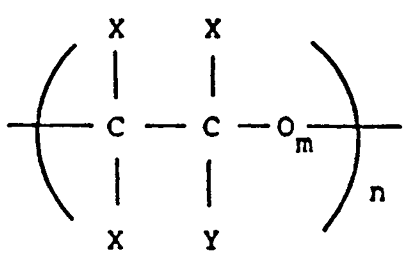

(I)

wherein X is selected from the group consisting of hydrogen and halogen; Y represents hydrogen, halogen or a monovalent moiety of the formula:

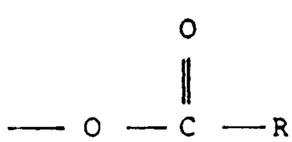

wherein R represents hydrocarbyl of 4 to 36 carbon atoms, inclusive; m is an integer of 0 to 1, provided that when Y is not hydrogen or halogen, m is 0; and n is an integer such that the polymer has a molecular weight of from 400 to 150,000.

The term "halogen" is used herein in its normal sense as embracive of chlorine, bromine, iodine and fluorine.

The term "hydrocarbyl" as used herein means the monovalent moiety obtained upon removal of a hydrogen atom from a parent hydrocarbon other than aryl. Representative of hydrocarbyl are alkyl of 4 to 36 carbon atoms, inclusive, such as butyl, pentyl, hexyl, heptyl, octyl, nonyl, undecyl, decyl, dodecyl, tridecyl, tetradecyl, pentadecyl, hexadecyl, heptadecyl, octadecyl, nonodecyl, eicosyl, heneicosyl, docosyl, tricosyl, tetracosyl, pentacosyl, hexacosyl, heptacosyl, octacosyl, nonoacosyl, triacontyl, hentriacontyl,

dotriacontyl, tritriacontyl, pentatriacontyl and the isomeric forms thereof; cycloalkyl of 4 to 8 carbon atoms, inclusive, such as cyclobutyl, cyclopentyl, cyclohexyl, cycloheptyl, cyclooctyl and the like; alkenyl of 4 to 36 carbon atoms, inclusive, such as butenyl, pentenyl, hexenyl, octenyl, nonenyl, decenyl, undececyl, dodecenyl, tridecenyl, pentadecenyl, octadecenyl, pentacosynyl, triacontenyl, tetracontenyl and isomeric forms thereof.

The compositions of the invention are useful for injection molding of complex parts such as valves and the like. The preferred molded articles may be sterilized by radiation and are stable in clarity and at elevated temperatures.

Synthetic polyester resins used in the present invention are a well known class of polyester resin. Representative of such polyester resins are those prepared by condensing either the cis- or trans- isomer (or a mixture thereof) of 1,4-cyclohexanedimethanol with a hexacarbocyclic dicarboxylic acid to produce a polyester having recurring units of the formula:-

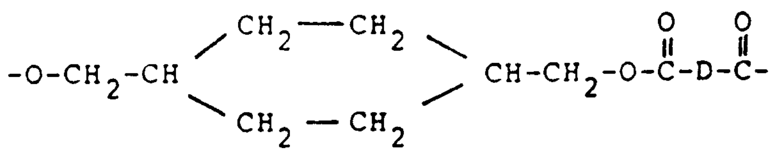

(II)

wherein the substituted cyclohexane ring is selected from the group consisting of the cis- and trans-isomers thereof and D represents an organic radical containing from 6 to 20 carbon atoms, which is the decarboxylated residue derived from a hexacarbocyclic dicarboxylic acid.

Preferred polyester resins of the formula (II) given above may be derived from the reaction of either the cis- or trans- isomer (or a mixture thereof) of 1,4-cyclohexanedimethanol with a mixture of iso- and terephthalic acids. These polyesters have recurring units of the formula:

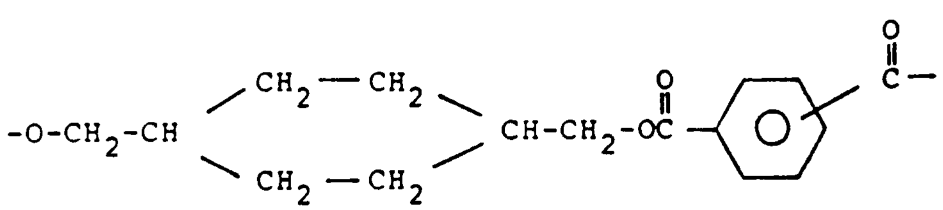

(III)

and these polyesters may be produced by well known methods in the art such as those set forth in U.S-A-2,901,466.

Of course, it is understood that the polyester resins may also be prepared by condensing 1,4-cyclohexanedimethanol and minor amounts of other bifunctional glycols containing from 2 to 10 or more carbon atoms such as ethylene glycol, butylene glycol, and the like.

Examples of hexacarbocyclic dicarboxylic acids wherein the carboxy radicals are attached in para relationship to a hexacarbocyclic residue indicated by D in formula (II) include terephthalic acid, trans-hexahydroterephthalic acid, p,p′sulfonyldibenzoic acid, 4,4′-diphenic acid, 4,4′-benzophenonedicarboxylic acid, 1,2-di(p-carboxyphenyl) ethane, 1,2-di(p-carboxyphenoxy) ethane, 4,4′-dicarboxydiphenyl ether, etc. and mixtures of these. All of these acids contain at least one hexacarbocyclic nucleus. Fused rings can also be present such as in 1,4- or 1,5-naphthalenedicarboxylic acid. The hexacarbocyclic dicarboxylic acids are preferably those containing a trans-cyclohexane nucleus or an aromatic nucleus containing from one to two benzene rings of which at least one has the usual benzenoid unsaturation. Of course, either fused or attached rings can be present. All of the compounds named in this paragraph come within the scope of this preferred group. The preferred dicarboxylic acid is terephthalic acid, or mixtures of terephthalic and isophthalic acids.

The above-described polyesters generally have an intrinsic viscosity between 0.40 and 2.0 dl/g measured in a mixture of 40% tetrachloroethane/60% phenol soluttion or a similar solvent at 25°C -30°C. Especially preferred polyesters will have an intrinsic viscosity in the range of 0.6 to 1.2 dl/g.

A wide variety of compatible (for blending) aromatic polycarbonate resins are well known and are characterized in part by having recurring polymer units of the formula:-

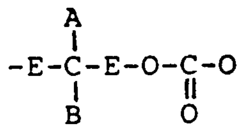

(IV)

wherein each -E- is selected from the group consisting of phenylene, halo-substituted phenylene and alkyl substituted phenylene and A and B are each selected from the group consisting of hydrogen, hydrocarbyl radicals free from aliphatic unsaturation and radicals which together with the adjoining

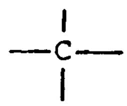

atom form a cycloalkane radical, the total number of carbon atoms in A and B being up to 12.

The above-described aromatic polycarbonate resins may be prepared by methods well known in the art; see for example the method described in U.S. Patent 3,989,672. Thus, they may be prepared in the conventional manner by reacting a dihydric phenol with a carbonate precursor in an interfacial polymerization process. Typical of some of the dihydric phenols that may be employed are bisphenol-A, (2,2-bis(4-hydroxy-3-methylphenyl)propane,4,4-bis(4-hydroxyphenyl)heptane, 2,2-(3,5,3′,5′-tetrachloro-4,4′-dihydroxydiphenyl)propane, (3,3′-dichloro-4,4′-dihydroxyphenyl)methane, bis 4-hydroxy phenyl sulfone and bis 4-hydroxy phenyl sulfide. Other dihydric phenols of the bisphenol type are also available and are disclosed in U.S-A-2,999,835; 3,028,365 and 3,334,154. Bisphenol-A is preferred.

It is, of course, possible to employ two or more different dihydric phenols or a copolymer of a dihydric phenol with a glycol or with hydroxy or acid terminated polyester, or with a dibasic acid in the event a carbonate copolymer or interpolymer rather than a homopolymer is desired for use in this invention. Also employed in the practice of this invention may be blends of any of the above materials to provide the aromatic carbonate polymer component.

The carbonate precursor may be either a carbonyl halide, a carbonate ester or a haloformate. The carbonyl halides which can be employed are carbonyl bromide, carbonyl chloride and mixtures thereof. Carbonyl chloride, also known as phosgene, is preferred.

Within the definition of polycarbonate also are copolyester-carbonates, that is the polymer made from a dihydric phenol, a dibasic acid and a phosgene precursor. The U.S - A - 3,169,121 discloses such copolyester-carbonates and methods of preparing them.

Also included herein are branched polymers wherein a polyfunctional aromatic compound is reacted with the dihydric phenol and carbonate precursor to provide a thermoplastic randomly branched polycarbonate polymer, wherein the recurring units of formulae (III) and (IV) above contain branching groups. The method of their preparation is described in US-A-4,001,184.

Also included herein are blends of a linear polymer and a branched polymer.

Preferred polycarbonate resins employed in blends with the hot-melt polyester resins previously described have an intrinsic viscosity between 0.3 and 1.0 deciliters/gram (dl/g), most preferably from 0.40 to 0.65 dl/g as measured at a temperature of 25 °C in methylene chloride or a like solvent.

The blends of polyester and polycarbonate resins are well known as are methods of their preparation; see for example the description given in U.S-A-4,188,314. In general, the blends may be prepared under extrusion conditions (melt blending). The blends may comprise from 10 to 95 parts by weight of the polyester resin and from 5 to 90 parts by weight of the polycarbonate resin, preferably from 15 to 95 parts of the polyester resin and from 5 to 85 parts by weight of the polycarbonate resin, and more preferably a maximum of polyester of 50 weight percent of the blend of polyester and polycarbonate.

The thermoplastically moldable compositions of the invention are prepared by the method of the invention, which comprises; blending into the polyester resins or blends thereof with a polycarbonate resin, an effective amount for mold release of a compound of the formula (I) given above. An effective amount is generally within the range of from 0.001 to 0.45 weight percent of resin, preferably 0.1 to 0.3 weight percent. Greater amounts may be used, but generally are unnecessary or undesirable. Higher amounts may result in resin degradation, particularly at elevated temperatures. The mold release additives may be added to the polyester resin or blend thereof in the same manner as any conventional additive, for example, in the dry state and coextruded or in a solvent and melt extruded with the resin.

Other additives in common use in thermoplastic resins may also be added. For example with respect to blends with an aromatic polycarbonate, additives which are commonly known to stabilize the resin thermally such as a phosphite can be employed. Hydrolytic stabilizers such as epoxides may also be employed as well as agents which are flame retardants, drip inhibitors, ductility enhancers, anti-oxidants, solvent resistance enhancers, ultraviolet light stabilizers and various inert fillers.

Mold-release additive compounds of the formula (I) given above are well known as are methods of their preparation.

Representative of such polymers are polyvinylbehenate, polyethyleneoxide, perfluorinated polyethyleneoxide, poly(trifluorochloroethylene) and the like.

The following examples describe the manner and process of making and using the invention and set forth the best mode contemplated by the inventor of carrying out the invention but are not to be construed as limiting the invention. All proportions of the mold releasing additives are in weight percent (parts by weight) of the base thermoplastic resin.

The mold-release pressures obtained with the various mold-release additives were obtained on an injection molding machine with a 118cc shot capacity. The mold is a 7.62cm × 7.62cm box with a 3.8/cm wall height. It has ejector pins at four corners with two of the pins being attached to strain gauge transducers for measuring the part ejection pressure. The mold is designed with very little draft so that the part would tend to stick to the core unless mold-release is used. The pressures reported are an average of a number of mold ejections. The number of ejections averaged is also reported.

EXAMPLES 1-4

A resin blend of 50 parts of poly(1,4-cyclohexane-dimethanol-terephthalate-co-isophthalate) [Kodar® A-150, Eastman Kodak Co.] and 50 parts of a polycarbonate resin (LEXAN® 105, General Electric Co.) stabilized with 0.1 parts of an aqueous solution of phosphoric acid (70%) is provided. The polycarbonate resin is the product of reaction of bisphenol-A and phosgene and has an inherent viscosity of from 0.40 to 0.65 dl/g measured at 25° C. in methylene chloride.

The resin mixture (100 parts) is separately dry formulated with a variety of mold-release agents, blended, melt extruded from a conventional extruder and injection molded into the box mold described above. After cooling to a demolding temperature, the molding is ejected. The agent and the proportion added (PBW) together with the averaged observed ejector pin pressures is set forth in the following Table, with the number of readings of pin pressure averaged.

EXAMPLE 5

The procedure of Examples 1-4, supra., is repeated except that no additive is added to the resin blend. The molding results are set forth in the Table, below is a control.

EXAMPLE 6

The procedure of Examples 1-4, supra., is repeated except that in place of the resin blend as used therein, 100 parts of the Kodar® A-150 polyester alone are used. The resin could not be injection molded.

TABLE

| EXAMPLE | ADDITIVE | PBW | EJECTOR PIN PRESSURE ($Kg/cm^2$) | NO. READINGS |
|---|---|---|---|---|
| 1 | POLY α-OLEFIN ① | 0.3 | 214 | |
| 2 | POLYVINYLBEHENATE ② | 0.3 | 243.7 | 18 |
| 3 | POLYTRIFLUOROCHLORO-ETHYLENE ③ (M.W. 600-1200) | 0.3 | 366 | |
| 4 | PERFLUORINATED POLY-ETHER ④ (M.W. 3700) | 0.3 | 395 | |
| 5 | None (Control) | Part broke, cannot he ejected from mold | | |

① Enery 3002; Emery Industries, Cincinnati, Ohio.
② Polysciences, Inc. Catalog No. 15775.
③ Fluorolube; Hooker Chemicals & Plastics Corp.
④ Fomblin R; Montecatini-Edison Co.; distributed by PCR Research Chemicals, Inc., Gainsville, Florida.

With respect to formula (I), a further preferred proviso is that when X and Y are hydrogen, m must be 1.

## Claims

**1.** A thermoplastically injection moldable, synthetic resin composition, which comprises;
a blend of

a) 10 to 95 parts by weight of a polyester resin prepared by the condensation of the cis- or trans-isomer of cyclohexanedimethanol with a hexacarbocyclic dicarboxylic acid;

and

b) 5 to 90 parts by weight of an aromatic polycarbonate; and 0.001 to 0.45 weight percent of the resin of a mold-release additive selected from polymers of the formula:-

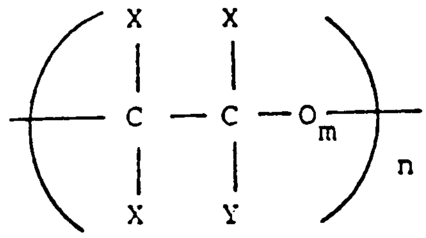

(I)

wherein X is selected from the group consisting of hydrogen and halogen; Y represents hydrogen, halogen or a monovalent moiety of the formula:

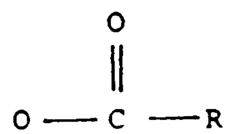

wherein R represents hydrocarbyl of 4 to 36 carbon atoms, inclusive; m is an integer of 0 to 1, provided when Y is not hydrogen or halogen, m is 0; and n is an integer such that the polymer has a molecular weight of from 400 to 150,000.

**2.** The composition of claim 1 wherein the amount of polycarbonate resin is from 5 to 85 weight percent.

**3.** The composition of claim 2 wherein the polycarbonate comprises 50 weight percent of the composition.

**Revendications**

**1.** Composition de résine synthétique moulable thermoplastiquement par injection, qui comprend ; un mélange de

a) 10 à 95 parties en poids d'une résine de polyester préparée par condensation de l'isomère cis ou trans du dihydroxyméthyl-1,4 cyclohexane avec un acide hexacarbocyclique dicarboxylique ;

et

b) de 5 à 90 parties en poids d'un polycarbonate aromatique et

de 0,001 à 0,45 pourcent en poids de la résine d'un additif de démoulage choisi parmi des polymères répondant à la formule :

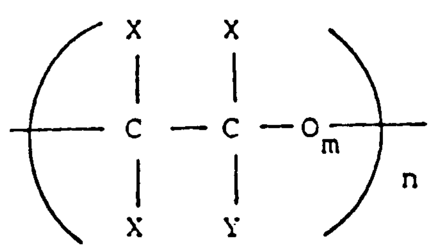

(I)

dans laquelle X est choisi dans le groupe constitué par l'hydrogène et les halogènes ; Y représente l'hydrogène, un halogène ou un reste monovalent répondant à la formule :

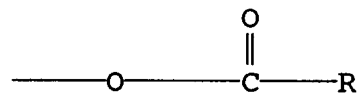

dans laquelle R représente un radical hydrocarboné ayant de 4 à 36 atomes de carbone, inclus ; m représente un nombre entier compris entre 0 et 1, à condition que lorsque Y ne représente pas l'hydrogène ou un halogène, m soit égal à 0 et n représente un nombre entier tel que le polymère présente une masse molaire comprise entre 400 et 150 000.

2. Composition selon la revendication 1, dans laquelle la quantité de résine de polycarbonate est comprise entre 5 et 85 pourcent en poids.

3. Composition selon la revendication 2, dans laquelle le polycarbonate représente 50 pourcent en poids de la composition.

**Patentansprüche**

1. Thermoplastische, im Spritzgußverfahren ausformbare synthetische Harzzusammensetzung, die eine Mischung enthält aus
   a) 10 - 95 Gew.-Teilen eines Polyesterharzes, hergestellt durch Kondensation des cis- oder trans Isomeren von Zyklohexandimethanol mit einer hexacarbozyklischen Dicarbonsäure und
   b) 5 - 90 Gew.-Teilen eines aromatischen Polycarbonats und 0,001 - 0,45 Gew.-% des Harzes von einem Formentrennmittel ausgewählt aus Polymeren der Formel

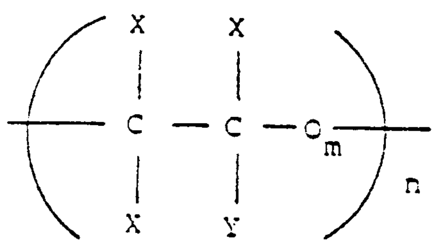

(I)

worin X ausgewählt ist aus der Gruppe bestehend aus Wasserstoff und Halogen; Y weiterhin Wasserstoff, Halogen oder einen einwertigen Rest der Formel

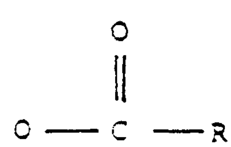

darstellt, worin R Hydrocarbyl mit 4 - 36 Kohlenstoffatomen einschließlich darstellt, m eine ganze Zahl von 0 - 1 ist mit der Maßgabe, daß dann, wenn Y kein Wasserstoff oder Halogen ist m gleich 0 ist und n eine ganze Zahl ist, so daß das Polymere ein Molekulargewicht von 400 - 150.000 aufweist.

2. Zusammensetzung nach Anspruch 1, worin die Menge des Polycarbonatharzes von 5 - 85 Gew.-% beträgt.

3. Zusammensetzung nach Anspruch 2, worin das Polycarbonat 50 Gew.-% der Zusammensetzung umfaßt.